# EUROPEAN PATENT SPECIFICATION

(11) **EP 2 141 496 B1**
(45) Date of publication and mention of the grant of the patent: **07.09.2011**
(21) Application number: 08740853.0
(22) Date of filing: 25.04.2008
(51) Int. Cl.: G01N 30/06, G01N 27/62, G01N 30/72, G01N 30/88

(54) **METHOD OF ANALYZING INORGANIC PHOSPHORUS IN ORGANIC MATERIAL**
VERFAHREN ZUR ANALYSE VON ANORGANISCHEM PHOSPHOR IN ORGANISCHEM MATERIAL
PROCÉDÉ D'ANALYSE DE PHOSPHORE INORGANIQUE DANS UN MATÉRIAU ORGANIQUE

(30) Priority: 26.04.2007 JP 2007116762; 19.12.2007 JP 2007326840
(43) Date of publication of application: 06.01.2010
(60) Divisional application: 11171089.3
(73) Proprietor: Sumitomo Electric Industries, Ltd., Chuo-ku Osaka-shi Osaka 541-0041 (JP)
(72) Inventor: IIDA, Masuo, Osaka-shi Osaka 554-0024 (JP)
(74) Representative: Setna, Rohan P.
(86) International application number: PCT/JP2008/058051
(87) International publication number: WO 2008/133325

(56) References cited:
- EP-A2- 0 382 312
- JP-A- 03 010 158
- JP-A- 05 093 719
- JP-A- 09 089 857
- JP-A- 50 080 186
- GUO W ET AL: "Thermal degradation behaviour of aromatic poly(ester-amide) with pendant phosphorus groups investigated by pyrolysis-GC/MS" POLYMER DEGRADATION AND STABILITY, BARKING, GB LNKD- DOI:10.1016/J.POLYMDEGRADSTAB.2005.04.026, vol. 91, no. 1, 1 January 2006 (2006-01-01), pages 21-30, XP025095645 ISSN: 0141-3910 [retrieved on 2006-01-01]
- BOZI ET AL: "Thermal decomposition of flame retarded polycarbonates" JOURNAL OF ANALYTICAL AND APPLIED PYROLYSIS, AMSTERDAM, NL LNKD- DOI:10.1016/J.JAAP.2007.01.001, vol. 79, no. 1-2, 19 April 2007 (2007-04-19), pages 337-345, XP022062379 ISSN: 0165-2370
- ULRIKE BRAUN,BERNHARD SCHARTEL: "Effect of Red Phosphorus and Melamine Polyphosphate on the Fire Behaviour og HIPS" JOURNAL OF FIRE SCIENCES, vol. 23, 1 January 2005 (2005-01-01), pages 5-30, XP009131931 USA ISSN: 0734-9041 DOI: 10.1177/0734904105043451
- KURIHARA KENJI ET AL: 'Koshuha Kanetsuho o Mochiita Bunsekimae Shoriho no Kaihatsu to Sono Oyo' DIC TECHNICAL REVIEW no. 7, 15 June 2001, pages 21 - 28, XP008120116
- SCHIEFERECKE J. ET AL.: 'Analysis of red phosphorus using a pyrolysis gas chromatography/mass spectrometer' JOURNAL OF ANALYTICAL AND APPLIED PYROLYSIS vol. 71, no. 1, March 2004, pages 47 - 50, XP008119984
- MAKITA M. ET AL.: 'PBT, PC no nan Nensei to Nensho Ondo Chokka no Netsubunkai Bunseki no Shomondai' 6TH KOBUNSHI BUNSEKI TORONKAI KOEN YOSHISHU 05 November 2001, pages 103 - 104

## Description

### Technical Field

The present invention relates to a method of analyzing for inorganic phosphorus contained in an organic material using pyrolysis gas chromatography, and in particular, to a method for analyzing inorganic phosphorus, such as red phosphorus, contained in a flame-retarded resin as a flame retardant.

### Background Art

For covering materials of insulated wires used in electric equipment and resin materials such as interior finishing materials for automobiles, flame resistance is required from the standpoint of safety and a fire-retardant property. Consequently, hitherto, polyvinyl chloride (PVC), which is a flame-retarded resin, has been often used. However, PVC generates a large amount of hazardous chlorine gas during combustion, and thus non-halogen flame-retardant resin compositions have been used in recent years.

Examples of the non-halogen flame-retardant resin composition include compositions in which a flame retardant is mixed with a non-halogen resin such as an olefin resin. Here, phosphorus flame retardants are used as the flame retardant. Alternatively, metal hydroxides such as aluminum hydroxide and magnesium hydroxide are also used as the flame retardant. However, in order to increase the flame retardant efficiency and to prevent a decrease in mechanical properties due to a decrease in the amount of metal hydroxide mixed, phosphorus flame retardants are used in combination.

Examples of the phosphorus flame retardants include organic phosphorus flame retardants such as phosphate esters and halogen-containing phosphate esters; and inorganic phosphorus flame retardants composed of inorganic phosphorus such as red phosphorus. Among these, inorganic phosphorus flame retardants have features that the rate of content of phosphorus element is high and that flame resistance can be imparted by a small amount of addition, and thus such inorganic phosphorus flame retardants are preferable flame retardants for some types of resins. For example, Patent Document 1 proposes a flame-retardant resin composition such as an olefin resin containing red phosphorus flame retardant.

Under these circumstances, in producing and shipping a product including such a flame-retardant resin composition containing an inorganic phosphorus flame retardant, e.g., insulated wires including the resin composition as an insulating covering, for the purpose of quality control thereof, an method of analyzing with which inorganic phosphorus such as red phosphorus can be analyzed has been desired for manufactures, and the method of analyzing has been desired also for purchasers of this product as an acceptance inspection.

Meanwhile, as for inorganic phosphorus such as red phosphorus, problems that hazardous phosphine is generated during combustion and that elusion of phosphorus from waste to a water system causes eutrophication of lakes, and other problems have been pointed out, and therefore, the use of inorganic phosphorus is not desired in some cases. Furthermore, in particular, regulation of the content of red phosphorus in organic materials has tended to be strict in recent years. Consequently, also from these standpoints, a method of analyzing with which inorganic phosphorus such as red phosphorus contained in an organic material can be analyzed has been desired as an acceptance inspection or the like.
Patent Document 1: Japanese Unexamined Patent Application Publication No. 2004-161924 Polymer Degradation and Stability 91 (2006) 21-30 discloses thermal degradation behaviour of aromatic poly(ester-amide) with pendant phosphorus groups investigated by pyrolysis - GC/MS. J. Anal. Appl. pyrolysis 79 (2007) 337-395 describes the thermal decomposition of flame retarded polycarbonates. J. Anal. Appl. Pyrolysis 71 (2009) 97-50 describes analysis of red phosphorus using a pyrolysis gas chromatography/mass spectrometer.

### Disclosure of Invention

### Problems to be Solved by the Invention

However, inorganic phosphorus such as red phosphorus is not dissolved in various types of solvents, and thus it is difficult to separate and collect such inorganic phosphorus. In addition, inorganic phosphorus itself has no infrared absorption in an infrared spectrometer. Alternatively, even when inorganic phosphorus mixed in an organic material such as a resin is analyzed using a Raman spectrometer, information about the organic material is mainly obtained and information about the inorganic phosphorus cannot be distinguished therefrom. Accordingly, inorganic phosphorus in an organic material such as a resin cannot be analyzed by any of these methods. Alternatively, by an elemental analysis, for example, energy-dispersive X-ray elemental analysis (EDX elemental analysis) using an energy-dispersive X-ray fluorescence analyzer, phosphorus as an element can be detected, but identification between inorganic phosphorus and organic phosphorus in an organic material can not be performed. Accordingly, in the case where organic phosphorus such as a phosphate ester may be contained, it is impossible to analyze inorganic phosphorus.

The present invention has been made in order to solve this problem in the related art. It is an object of the present invention to provide a method of analyzing for simply, rapidly, and reliably analyzing inorganic phosphorus such as red phosphorus or yellow phosphorus contained in an organic material, in particular, inorganic phosphorus contained in a resin as a flame retardant .

### Means for Solving the Problems

As a result of intensive studies to solve the above problem, the inventor of the present invention found that although red phosphorus and yellow phosphorus are solid inorganic substances, they can be detected by pyrolysis gas chromatography, which is exclusively used to analyze organic materials such as polymer materials. In addition, it was found that, according to an apparatus for analyzing using pyrolysis gas chromatography, inorganic phosphorus contained in an organic material can be analyzed simply, rapidly, and reliably by gasifying a sample and then measuring the gasified sample by gas chromatography. These findings resulted in completion of the present invention. Furthermore, the inventor of the present invention found that, by using a mass spectrometer as means for detecting fractions of the gas chromatography, inorganic phosphorus contained in an organic material can be more reliably analyzed, and good quantitativity is obtained.

Specifically, as a first aspect of invention of the present application, the present invention provides a method of analyzing for red phosphorus contained in an organic material, the method including the steps of:
pyrolyzing a sample composed of an organic material by heating the sample to a temperature equal to or higher than the sublimation temperature of red phosporous to gasify the sample;
separating the pyrolyzed sample to fractions by gas chromatography; and
[0011] detecting a fraction of a retention time corresponding to the red phosphorus.

Examples of the organic material used as a sample to which the method of analyzing the present invention is applied are resins (polymers). Furthermore, the method of analyzing of the present invention can also be applied to solutions in which a resin is dissolved, monomers and the like, and other organic materials, e.g., phosphate esters.

The step of pyrolyzing a sample by heating the sample to a temperature equal to or higher than the sublimation temperature of red phosphorous to gasify the sample is performed by heating the sample to a temperature at which the sample is gasified or higher. Among various types of inorganic phosphorus, red phosphorus has a high sublimation temperature; 416°C or higher. Therefore, in order to reliably sublime red phosphorus and to perform analysis with a high accuracy, the heating temperature is preferably 500°C or higher. In particular, in the case where inorganic phosphorus contained in a resin is a target of the analysis, it is necessary to heat the sample at a temperature equal to or higher than the decomposition temperature of the resin. Accordingly, a preferable heating temperature in such a case is in the range of about 600°C to 800°C.

In addition, the heating time is a time required for completely gasifying the sample or longer. The heating rime varies depending on the heating temperature, the amount of sample, and the like, and is not particularly limited. Heating means is not particularly limited, and any heating means used for an ordinary pyrolysis gas chromatograph can be used.

The sample pyrolyzed and gasified is introduced into a column of a gas chromatograph. Components in the sample are separated in accordance with a difference in the distribution equilibrium constant from that of a stationary phase, and eluted at times (retention times) that differ for respective components. Conditions for this gas chromatography are the same as conditions for ordinary pyrolysis gas chromatography used in analysis of resins.

Either a packed column or a capillary column can be used as the column, but a capillary column is preferably used in qualitative analysis.

The sample eluted from the column of the gas chromatograph is introduced into a detector to detect the presence or absence of elusion (fraction) in accordance with the retention time. The analysis of red phosphorus is performed by detecting a fraction at a retention time corresponding to the red phosphorus. For example if a detection peak (fraction) is present at a retention time corresponding to the red phosphorus, it is confirmed that the red phosphorus is present in the sample. Furthermore, organic phosphorus has a detection peak (fraction) at a different retention time. Accordingly, whether phosphorus contained in the organic material of the sample is red phosphorus or not can be distinguished by this analysis.

The retention time corresponding to red phosphorus varies depending on operating conditions for the pyrolysis gas chromatograph, the type of column, and the like. Therefore, prior to the measurement of a sample, the same analysis as that described above is performed using a standard sample of red phosphorus, so that the retention time corresponding to the phosphorus is determined in advance. the retention time corresponding to the red phosphorus is determined in advance.

As the detector, a flame ionization detector (FID), a flame photometric detector (FPD), a thermal conductivity detector (TCD), a nitrogen phosphorus detector (NPD), and the like, all of which are ordinarily used in a gas chromatograph can be used. In the case where any of these detectors is used, qualitative analysis can be performed on the basis of the presence or absence of a peak of a retention rime corresponding to red phosphorus.

More preferably, the detection is performed using a mass spectrometer (MS) instead of the above detector (a second aspect of invention of the present application). Specifically, in such an FID, an FPD, a TCD, or and NPD, identification of red phosphorus is performed on the basis of only the retention time. Therefore, when a component having the same retention time as that of red phosphorus is contained in a sample, identification of the red phosphorus may be difficult in some cases. On the other hand, according to mass spectrometry, red phosphorus has characteristic peaks at m/z = 31, 62, 93, and 124. Accordingly, identification of the red phosphorus can be reliably performed on the basis of the presence or absence of these peaks.

Furthermore, quantitative analysis can also be performed using the FID, the FPD, the TCD, the NPD, and the mass spectrometer mentioned above. For example, a resin composition whose content of red phosphorus is known is prepared, the resin composition is measured by the above-described method, a calibration curve is prepared on the basis of the area of a peak obtained, the height of the peak, or the like. Subsequently, a measurement of a sample is performed, and quantitative analysis can be performed on the basis of the calibration curve and the area of a peak or the height of the peak obtained by the measurement of the sample.

According to the present invention, red phosphorus contained in an organic material can be analyzed, and it can be identified whether phosphorus contained in the organic material is red phosphourus or not. In particular, the method of analyzing of the present invention can be suitably applied to analysis of red phosphorus contained in a resin and analysis of red phosphorus contained in a solution in which a resin is dissolved, a monomer, a phosphate ester, or the like, all of which have been difficult to simply and reliably perform to date (a third aspect of invention of the present application).

Examples of the resin to which the present invention can be applied include polyolefin, polycarbonate, polycarbonate/acrylonitrile-butadiene-styrene (ABS), polyamide, and polyester resins. However, organic materials to which the present invention can be applied are not limited to these resins. Furthermore, the present invention can be applied also to solutions in which a resin is dissolved, monomers, and other organic materials, e.g., phosphate esters.

### Advantages

By employing a method of analyzing for red phosphorus contained in an organic material of the present invention, or by using an analyzing for red phosphorus contained in an organic material of the present invention, analysis of red phosphorus, in particular, red phosphorus contained in a resin, can be performed simply, rapidly, and reliably. In addition, whether phosphorus contained in an organic material of a sample is red phosphorus or not can be identified. Furthermore, quantitative analysis of red phosphorus can be performed with a good accuracy.

### Brief Description of Drawings

[Fig. 1] Figure 1 includes a chromatogram and a mass spectrum obtained by gas chromatography/mass spectrometry (GC/MS) of a standard sample.
[Fig. 2] Figure 2 includes a chromatogram and a mass spectrum obtained by GC/MS of a sample for measurement.
[Fig. 3] Figure 3 is a graph showing the relationship between the red phosphorus content and the peak intensity ratio of a GC/MS spectrum.

### Best Mode for Carrying Out the Invention

Next, the best mode for carrying out the present invention will be described on the basis of Examples, but the scope of the present invention is not limited to Examples.

### EXAMPLES

A sample was pyrolyzed (gasified) with a pyrolyzer described below, and the gasified sample was measured with a gas chromatograph/mass spectrometry (GC/MS apparatus) described below.

### (Pyrolyzer and pyrolysis condition)

A pyrolyzer manufactured by Frontier Laboratories Ltd. was used. The pyrolysis condition was 600°C x 0.2 minutes.

### (GC/MS apparatus)

Agilent 6890 manufactured by Agilent Technologies, Inc. was used. Operating conditions for this apparatus are described below.
Column: HP-5MS (inner diameter: 0.25 mm, film thickness: 0.25 µm, length: 30 m)
Column flow rate: He gas 1.0 mL/min.
Temperature-increasing condition: The temperature was increased from 50°C to 320°C at a rate of 25°C /min. and maintained at 320°C for five minutes.
MS temperature: 230°C (MS Source), 150°C (MS Quad)
Interfacing unit temperature: 280°C
Measurement mode: SCAN mode
Note that the measurement by mass spectrometry (MS) was performed in the range of m/z = 33 to 550 in order to avoid peaks of oxygen.

### [Measurement of standard sample (measurement of retention time of inorganic phosphorus)]

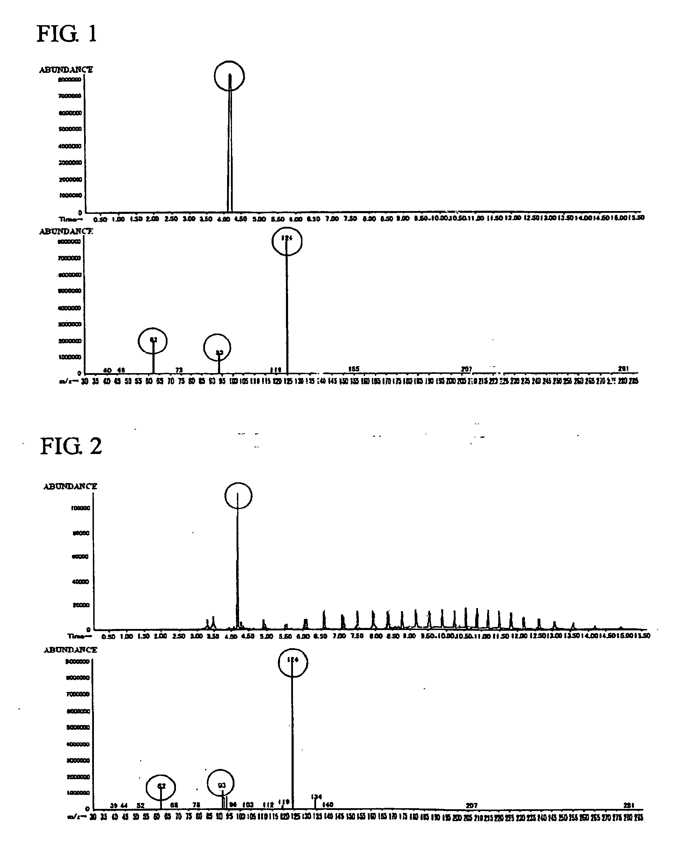

Red phosphorus (P₄ = 124) (manufactured by KANTO CHEMICAL CO., INC.: reagent) was used as a standard sample. First, 0.1 mg of this sample was sampled and pyrolyzed under the condition described above to gasify the sample. The gasified sample was introduced into the above GC/MS apparatus, and a measurement was performed under the conditions described above. The measurement results are shown in Fig. 1. Note that, in Fig. 1, the upper part is a data (chromatogram) obtained by the chromatograph (GC) and the lower part is a data (mass spectrum) obtained by the mass spectrometer (MS).

Regarding the peak detected at a retention time of 4.2 minutes of the chromatogram (the data of the upper part), in the mass spectrum (the data of the lower part) obtained by mass spectrometry, peaks characteristics of red phosphorus (P₄ ≡ 124) were detected at positions of m/z = 62, 93, and 124. Specifically, in this example, the peak at a retention time of 4.2 minutes of the chromatogram is a peak corresponding to inorganic phosphorus. By obtaining a mass spectrum regarding the peak at this retention time, inorganic phosphorus can be detected.

### [Measurement 1 of sample for measurement]

As a sample for measurement, an inorganic phosphorus (red phosphorus)-containing resin composition in which magnesium hydroxide (reagent manufactured by KANTO CHEMICAL CO., INC.) and red phosphorus (reagent manufactured by KANTO CHEMICAL CO., INC.) were mixed with ethylene-ethyl acrylate copolymer (EEA, trade name: EVAFLEX A701) in a ratio of EEA:magnesium hydroxide:red phosphorus = 100:90:10 (weight ratio) was used. First, 0.1 mg of this sample was sampled and pyrolyzed under the condition described above to gasify the sample. The gasified sample was introduced into the above GC/MS apparatus, and a measurement was performed under the conditions described above. The measurement results are shown in Fig. 2. In Fig. 2, the upper part is a chromatogram obtained by the GC and the lower part is a mass spectrum obtained by the MS.

Referring to the chromatogram of Fig. 2, as in the case of the standard sample, a peak was detected at a retention time of 4.2 minutes. Also, in the mass spectrum regarding the peak at a retention time of 4.2 minutes, as in the case of the standard sample, peaks were detected at positions of m/z = 62, 93, and 124. This result clearly shows that inorganic phosphorus (red phosphorus) is contained in the sample for measurement. Thus, it was found that red phosphorus contained in a resin composition can be analyzed by the method of the present invention.

### [Measurement 2 of samples for measurement]

Samples (1) to (4) of inorganic phosphorus-containing resin compositions were prepared as in [Measurement 1 of sample for measurement] except that the mixing ratio (weight ratio) of EEA/magnesium hydroxide/red phosphorus was changed as follows, and a measurement of GC/MS was performed for each of the samples.

EEA/magnesium hydroxide/red phosphorus =
Sample (1) 100/90/2.2 (red phosphorus content: 1.1 wt %)
Sample (2) 100/90/4.4 (red phosphorus content: 2.2 wt %)
Sample (3) 100/90/6.3 (red phosphorus content: 3.2 wt %)
Sample (4) 100/90/8.4 (red phosphorus content: 4.2 wt %)

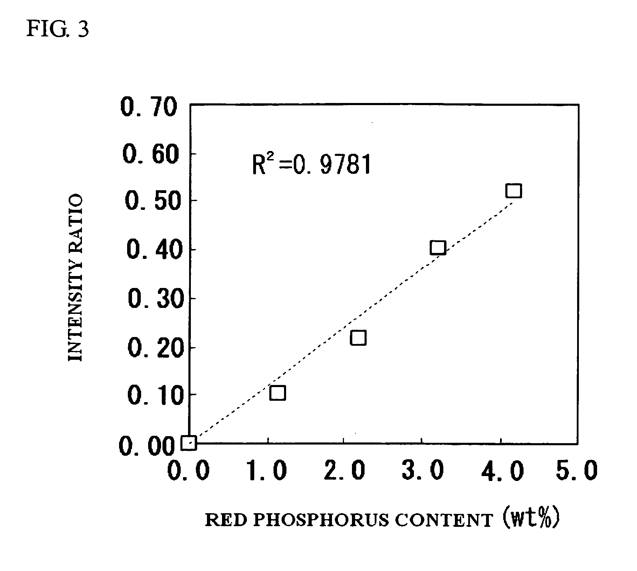

Figure 3 is a graph showing the relationship between the peak intensity ratio of the position of the peak at a retention time of 4.2 minutes (the value obtained by dividing the value of the area of the peak at a retention time of 4.2 minutes by the weight of the measurement sample) obtained by the measurement of GC/MS and the content of inorganic phosphorus (wt%). As is apparent from Fig. 3, there is a good correlation between the content of inorganic phosphorus in the resin and the peak intensity in the GC/MS analysis, and the correlation coefficient thereof was 0.9781. This result showed that not only qualitative analysis of inorganic phosphorus but also quantitative analysis with a high accuracy can be performed by the method of analyzing of the present invention.

Note that, in the above Examples, only cases where red phosphorus is used as a sample have been described.

### Industrial Applicability

The method of analyzing for red phosphorus contained in an organic material of the present invention can be applied to (used for), for example, quality control in the production and shipping of a product including a resin composition containing red phosphorus, such a flame-retardant insulated wire; a solution in which a resin that may contain red phosphorus is dissolved; a monomer that may contain red phosphorus; or other organic materials, e.g., such as a phosphate ester, and an acceptance inspection in purchasing such a product.

## Claims

1. A method of analyzing for red phosphorus contained in an organic material, the method comprising the steps of:
pyrolyzing a sample composed of an organic material by heating the sample to a temperature equal to or higher than the sublimation temperature of red phosphorus to gasify the sample;
separating the pyrolyzed sample to fractions by gas chromatography; and
detecting a fraction of a retention time corresponding to the red phosphorus.

2. The method of analyzing for red phosphorus contained in an organic material according to Claim 1, wherein the step of detecting is performed with a mass spectrometer.

3. The method of analyzing for red phosphorus contained in an organic material according to Claim 1 and 2, wherein the sample is a resin, a solution in which a resin is dissolved, or a monomer.

## Patentansprüche

1. Verfahren zum Analysieren von rotem Phosphor, der in einem organischen Material enthalten ist, wobei das Verfahren die Schritte umfasst:
Pyrolysieren einer aus einem organischen Material aufgebauten Probe durch Erwärmen der Probe auf eine Temperatur, die gleich oder höher als die Sublimationstemperatur von rotem Phosphor ist, um die Probe in die Gasform zu bringen;
Auftrennen der pyrolysierten Probe in Fraktionen mittels Gaschromatografie; und
Detektieren einer Fraktion mit einer Retentionszeit, die rotem Phosphor entspricht.

2. Verfahren zum Analysieren von in einem organischen Material enthaltenem roten Phosphor gemäss Anspruch 1, wobei der Schritt des Detektierens mit einem Massenspektrometer durchgeführt wird.

3. Verfahren zum Analysieren von in einem organischen Material enthaltenem roten Phosphor gemäss Anspruch 1 oder 2, wobei die Probe ein Harz, eine Lösung, in der ein Harz gelöst ist, oder ein Monomer ist.

## Revendications

1. Procédé d'analyse du phosphore rouge contenu dans un matériau organique, le procédé comprenant les étapes de :
réalisation de la pyrolyse d'un échantillon composé d'un matériau organique en chauffant l'échantillon à une température supérieure ou égale à la température de sublimation du phosphore rouge afin de gazéifier l'échantillon ;
séparation de l'échantillon pyrolysé en fractions par chromatographie en phase gazeuse ; et
détection d'une fraction ayant un temps de rétention correspondant au phosphore rouge.

2. Procédé d'analyse du phosphore rouge contenu dans un matériau organique selon la revendication 1, dans lequel l'étape de détection est réalisée à l'aide d'un spectromètre de masse.

3. Procédé d'analyse du phosphore rouge contenu dans un matériau organique selon la revendication 1 et 2, dans lequel l'échantillon est une résine, une solution dans laquelle une résine est dissoute, ou un monomère.
